# EUROPEAN PATENT APPLICATION

(11) **EP 4 712 636 A1**
(43) Date of publication of application: **18.03.2026**
(21) Application number: 24803285.6
(22) Date of filing: 25.03.2024
(51) Int. Cl.: H04W 72/0457, H04W 84/12

(54) **COMMUNICATION DEVICE, METHOD FOR CONTROLLING SAME, AND PROGRAM**

(30) Priority: 11.05.2023 JP 2023078699
(71) Applicant: Canon Kabushiki Kaisha, Tokyo, 146-8501 (JP)
(72) Inventor: YOSHIKAWA, Yuki, Tokyo 146-8501 (JP)
(74) Representative: Canon Europe Limited
(86) International application number: PCT/JP2024/011606
(87) International publication number: WO 2024/232170

(57) **Abstract**

A communication device is configured to include first and second interfaces (STA and AP functions) that are communication interfaces capable of being used for communication with mutually-different counterpart devices. In a case where operations of the second interface are started in a state where the first interface is performing the multi-link communication, the communication device selects, as frequency channels to be used on links of the second interface, at least some of a plurality of frequency channels each used on a corresponding one of a plurality of links by the first interface. Further, the communication device controls the second interface to communicate with the counterpart device using the selected frequency channels.

## Description

### TECHNICAL FIELD

The present invention relates to a communication device capable of executing multi-link communication using a plurality of parallel links, a method of controlling the same, and a program.

### BACKGROUND ART

The IEEE 802.11 series standards are known as the wireless local area network ("wireless LAN" or "WLAN") communication standards developed by the Institute of Electrical and Electronics Engineers (IEEE). IEEE 802.11 series standards include standards such as the IEEE 802.11 a/b/g/n/ac/ax standards and the like. For example, the IEEE 802.11ax standard uses Orthogonal Frequency Division Multiple Access (OFDMA) to standardize techniques for improving communication speeds under congested conditions in addition to providing high peak throughput of up to 9.6 gigabits per second (Gbps) (see Patent Literature (PTL) 1).

The IEEE is also moving forward with the development of the IEEE 802.1The standard to further increase throughput and improve frequency utilization efficiency. The introduction of multi-link communication technology is under consideration with the IEEE 802.11be standard. Multi-link communication is a technique in which one access point (AP)-side communication device (multi-link device; MLD) communicates with one station (STA)-side communication device (MLD) by establishing a plurality of parallel links over mutually-different frequency channels. In a case where a communication device performs multi-link communication, the communication efficiency can be improved by performing a Simultaneous Transmit and Receive (STR) operation that performs transmission and reception over a plurality of links simultaneously.

### CITATION LIST

### PATENT LITERATURE

PTL 1: Japanese Patent Laid-Open No. 2018-50133

### SUMMARY OF INVENTION

### TECHNICAL PROBLEM

In a communication device such as that described above, a plurality of communication interfaces that can be used to communicate with different counterpart devices (e.g., a communication interface that causes the communication device to operate as an access point (AP) and a communication interface that causes the communication device to operate as a station (STA)) can be operated in parallel, and each communication interface may perform multi-link communication. In such a case, it may be desirable to determine the frequency channel used in each link such that the link of each communication interface does not interfere with or otherwise negatively affect the links of the other communication interfaces, in order to stabilize the communication.

### SOLUTION TO PROBLEM

The present disclosure provides a technique that, in a case of operating a plurality of communication interfaces in parallel in a communication device capable of executing multi-link communication, makes it possible to more appropriately determine a frequency channel to be used in each link, in order to communicate in a stable manner.

A communication device according to one aspect of the present disclosure is a communication device capable of executing multi-link communication using a plurality of parallel links established over mutually-different frequency channels, the communication device comprising: first and second interfaces that are communication interfaces capable of being used for communication with mutually-different counterpart devices; selecting means for, in a case where operations of the second interface are started in a state where the first interface is performing the multi-link communication, selecting, as frequency channels to be used on links of the second interface, at least some of a plurality of frequency channels each used on a corresponding one of a plurality of links by the first interface; and control means for controlling the second interface to communicate with the counterpart device using the frequency channels selected by the selecting means.

### ADVANTAGEOUS EFFECTS OF INVENTION

According to the present disclosure, it becomes possible to, in a case of operating a plurality of communication interfaces in parallel in a communication device capable of executing multi-link communication, more appropriately determine a frequency channel to be used in each link, in order to communicate in a stable manner.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a diagram illustrating an example of the configuration of a network.
FIG. 2 is a block diagram illustrating an example of the hardware configuration of a communication device.
FIG. 3 is a block diagram illustrating an example of the functional configuration of the communication device.
FIG. 4A is a flowchart illustrating a sequence of processing for determining operating channels for an AP function according to a first working example.
FIG. 4B is a flowchart illustrating a sequence of processing for determining operating channels for an AP function according to the first working example.
FIG. 4C is a flowchart illustrating a sequence of processing for determining operating channels for an AP function according to the first working example.
FIG. 5 is a sequence chart illustrating an example of operations performed by the communication device according to the first working example.
FIG. 6A is a flowchart illustrating a sequence of processing for determining operating channels of an AP function according to a second working example.
FIG. 6B is a flowchart illustrating a sequence of processing for determining operating channels of an AP function according to the second working example.
FIG. 7A is a sequence chart illustrating an example of operations performed by the communication device according to the second working example.
FIG. 7B is a sequence chart illustrating an example of operations performed by the communication device according to the second working example.
FIG. 7C is a sequence chart illustrating an example of operations performed by the communication device according to the second working example.
FIG. 8A is a flowchart illustrating a sequence of processing for displaying a settings screen for AP operations according to a third working example.
FIG. 8B is a flowchart illustrating a sequence of processing for displaying a settings screen for AP operations according to the third working example.
FIG. 9 illustrates an example of the settings screen for AP operations.

### DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made on an invention that requires all such features, and multiple such features may be combined as appropriate. Furthermore, in the attached drawings, the same reference numerals are given to the same or similar configurations, and a redundant description thereof is omitted.

### <Network Configuration>

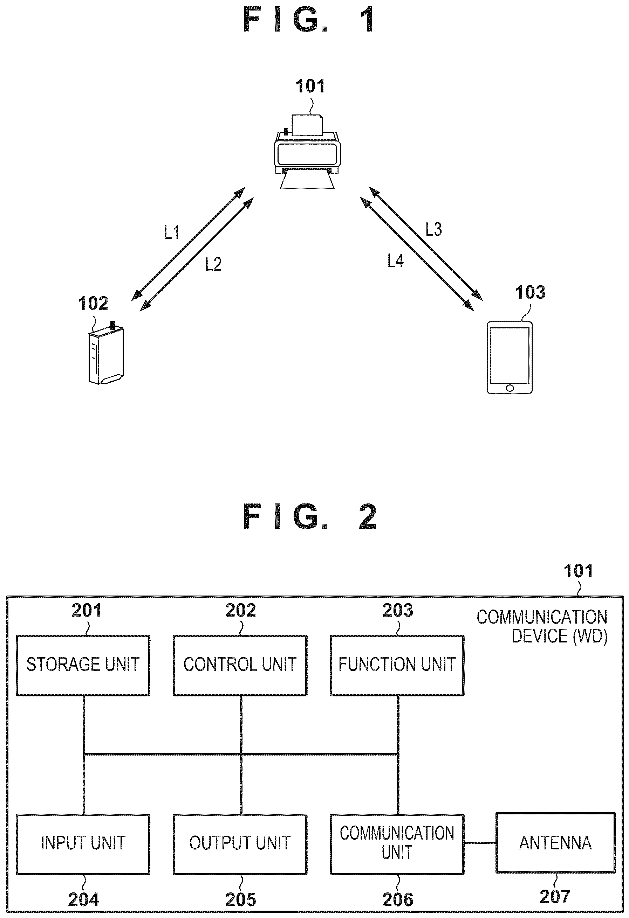

FIG. 1 illustrates an example of the configuration of a wireless network according to an embodiment of the present disclosure. Communication devices 101 to 103 illustrated in FIG. 1 are wireless devices (WDs) having a wireless communication function for communicating wirelessly with an external device.

The communication device 101 can operate as an access point (AP) that has the role of constructing a wireless network. The communication device 101 can further operate as a station (STA) that has the role of joining a wireless network constructed by another AP. In other words, the communication device 101 is configured as a wireless device having an AP function for operating the communication device 101 as an AP, and an STA function for operating the communication device 101 as an STA. The communication device 102 is configured as a wireless device having an AP function, and the communication device 102 is configured as a wireless device having an STA function. Hereinafter, the communication device 101 is also referred to as "WD 101"; the communication device 102, as "AP 102"; and the communication device 103, as "STA 103". Although illustrated as separate communication devices in the example in FIG. 1, the AP 102 and the STA 103 may be implemented as an AP function and an STA function in the same communication device.

In the example in FIG. 1, the WD 101 joins the wireless network constructed by the AP 102 by using the STA function to connect wirelessly to the AP 102 as an STA. The WD 101 also constructs a wireless network using the AP function. The STA 103 joins the wireless network constructed by the AP function of the WD 101 by wirelessly connecting to the WD 101 as an STA. Accordingly, the WD 101 and the AP 102 communicate wirelessly using signals transmitted and received by the WD 101 as the STA. Additionally, the WD 101 and the STA 103 communicate wirelessly using signals transmitted and received by the WD 101 as the AP.

The communication devices 101 to 103 (the WD 101, the AP 102, and the STA 103) support the IEEE 802.11be (Extremely High Throughput or Extreme High Throughput; EHT) standard, which is a successor standard to the IEEE 802.11ax (High Efficiency; HE) standard, as a wireless LAN communication standard. Each communication device is capable of wireless communication compliant with the IEEE 802.11be standard. In addition, each communication device is configured to be capable of performing wireless communication in multiple frequency bands (2.4 GHz, 5 GHz, and 6 GHz bands, in the present embodiment). The frequency bands that each communication device can use are not limited to these, and different frequencies may be used, such as the 60 GHz band or the like, for example. In addition, each communication device is configured to be capable of communicating using a bandwidth of 20 MHz, 40 MHz, 80 MHz, 160 MHz, 320 MHz, and the like. The bandwidths that each communication device can use are not limited to these, and different bandwidths may be used, such as 240 MHz and 4 MHz, for example.

In the present embodiment, the communication devices 101 to 103 support at least the IEEE 802.11be standard in the IEEE 802.11 standard series. The communication devices 101 to 103 may further support at least one legacy standard in the IEEE 802.11 standards prior to the IEEE 802.11be standard. The legacy standards are the IEEE 802.11a/b/g/n/ac/ax standards.

In addition to the IEEE 802.11 standard series, the communication devices 101 to 103 may support other communication standards such as Bluetooth^{®}, Near Field Communication (NFC), Ultra Wide Band (UWB), Zigbee, Multi Band OFDM Alliance (MBOA), or the like. UWB includes wireless USB, wireless 1394, Winet, and the like. The communication devices 101 to 103 may further support communication standards for wired communication, such as wired LAN or the like.

The communication devices 101 to 103 are multi-link devices (MLDs) having a function for executing multi-link communication, in which a plurality of links (transmission paths) are established and communication is performed over a corresponding plurality of frequency channels. An AP that performs multi-link communication is also referred to as an "AP MLD", and an STA that performs multi-link communication is also referred to as a "non-AP MLD" or a "STA MLD". In multi-link communication, a plurality of links are established and used between the AP MLD and the STA MLD.

In multi-link communication, the plurality of links to be established between the communication devices (between the AP MLD and the STA MLD) are established on mutually-different frequency channels. The channel spacing of the frequency channels on which each of the plurality of links is established can be at least greater than 20 MHz. Here, "frequency channel" is a frequency channel defined in the IEEE 802.11 standard series, and refers to a frequency channel over which wireless communication compliant with the IEEE 802.11 standard series can be executed. The IEEE 802.11 standard series defines multiple frequency channels in each of the 2.4 GHz, 5 GHz, 6 GHz, and 60 GHz frequency bands. In addition, the IEEE 802.11 standard series defines the bandwidth of each frequency channel as 20 MHz. By bonding one frequency channel to an adjacent frequency channel, a bandwidth of 40 MHz or more may be used in a single frequency channel.

In the example in FIG. 1, two links L1 and L2 are established in parallel between the WD 101 and the AP 102. Additionally, two links L3 and L4 are established in parallel between the WD 101 and the STA 103. For example, the WD 101 establishes a link over a first frequency channel in the 5 GHz band as the link L1, and establishes a link over a second frequency channel in the 5 GHz band as the link L2. This enables the WD 101 to communicate with the AP 102 over both links L1 and L2. In this case, the WD 101 maintains the link L2 over the second frequency channel in parallel with the link L1 over the first frequency channel.

In this manner, the WD 101 can improve the throughput in communication with the AP 102 by establishing a plurality of links with the AP 102 over a corresponding plurality of frequency channels and performing multi-link communication. Likewise, the WD 101 can improve the throughput in communication with the STA 103 by establishing a plurality of links with the STA 103 (the links L3 and L4, in the example in FIG. 1) over a corresponding plurality of frequency channels and performing multi-link communication.

Note that a plurality of links over different frequency bands (e.g., a link in the 5 GHz band and a link in the 6 GHz band) may be established as the plurality of links to be established for the multi-link communication between the communication devices. Alternatively, a plurality of links, each over a plurality of different channels, may be established in the same frequency band. For example, two links may be established over channel 7 and channel 207, respectively, in the 6 GHz band.

In addition, a plurality of links in the same frequency band and links in different frequency bands may be mixed as the plurality of links to be established for multi-link communication. For example, two links may be established over channel 36 and channel 149, respectively, in the 5 Ghz band, and one link may be established over channel 15 in the 6 GHz band. By establishing a plurality of links over different frequency bands between the communication devices in this manner, even in a case where a certain frequency band is congested, communicating over the links established in the other frequency bands makes it possible to prevent reduced throughput and communication delay.

The communication devices 101 to 103 (the WD 101, the AP 102, and the STA 103) can be, for example, wireless LAN routers, personal computers (PCs), cameras, tablet terminals, PCs, smartphones, mobile phones, headsets, video cameras, or the like, but are not limited thereto. The communication devices 101 to 103 may be information processing devices including wireless chips or the like capable of executing wireless communication compliant with the IEEE 802.11be standard. Note that FIG. 1 illustrates an example in which the WD 101 is a printer, the AP 102 is a wireless LAN router, and the STA 103 is a smartphone. The WD 101 according to the present embodiment is assumed to communicate using the link L1 and the link L3 using common radio frequency (RF) resources (RF units) due to hardware constraints.

### <Hardware Configuration of Communication Device>

FIG. 2 is a block diagram illustrating an example of the hardware configuration of the communication device 101 (the WD 101). The WD 101 includes a storage unit 201, a control unit 202, a function unit 203, an input unit 204, an output unit 205, a communication unit 206, and at least one antenna 207. Note that the AP 102 and the STA 103 can have the same hardware configuration as the WD 101.

The storage unit 201 is constituted by one or more memories such as a Read Only Memory (ROM) and/or a Random Access Memory (RAM). The storage unit 201 stores various information such as computer programs for performing various operations (described later), communication parameters for wireless communication, and the like. Other types of storage media, such as flexible disks, hard disks, optical disks, magneto-optical disks, CD-ROMs, CD-Rs, magnetic tape, non-volatile memory cards, DVDs, and the like, may be used for the one or more memories constituting the storage unit 201. The storage unit 201 may include a plurality of memories and the like.

The control unit 202 is constituted by one or more processors such as a Central Processing Unit (CPU) and/or a Micro Processing Unit (MPU). The control unit 202 controls the WD 101 as a whole by reading out and executing the computer programs stored in the storage unit 201. The control unit 202 may be configured to control the WD 101 as a whole in cooperation with the computer programs and an operating system (OS) stored in the storage unit 201. The control unit 202 may include a plurality of processors, e.g., may be multi-core, and may be configured to control the WD 101 as a whole using the plurality of processors.

The control unit 202 generates data or signals (wireless frames) to be transmitted in communication with other communication devices. The control unit 202 further controls the function unit 203 to execute predetermined processing, such as wireless communication, image capturing, printing, projection, and the like. The function unit 203 is hardware for the WD 101 to execute the predetermined processing.

The input unit 204 accepts various operations from a user. The output unit 205 makes various outputs to the user through a monitor screen or a speaker. Here, the output by the output unit 205 can be one or more of a display on the monitor screen, audio output through the speaker, vibration output, and the like. The input unit 204 and the output unit 205 may be implemented as a single module, such as a touchscreen. Additionally, the input unit 204 and the output unit 205 may each be configured as an integral part of the WD 101, or separate from the WD 101.

The communication unit 206 controls wireless communication compliant with the IEEE 802.11be standard. The communication unit 206 controls the at least one antenna 207 to transmit and receive signals for wireless communication generated by the control unit 202. The WD 101 transmits and receives various data, such as image data, document data, video data, and the like, through communication with the communication device 102 via the communication unit 206.

Note that in addition to the IEEE 802.11be standard, the communication unit 206 may be configured to control wireless communication compliant with other IEEE 802.11 standards, as well as wired communication over a wired LAN or the like. If the WD 101 supports an NFC standard, a Bluetooth standard, or the like in addition to the IEEE 802.11be standard, it may also be configured to control wireless communication compliant with those communication standards as well. If the WD 101 is configured to be capable of executing wireless communication compliant with a plurality of communication standards, it may include the separate communication units and antennas for the different communication standards.

The at least one antenna 207 is an antenna capable of communication in a predetermined frequency band (the 2.4 GHz, 5 GHz, and 6 GHz bands, in the present embodiment). The WD 101 may have a separate antenna for each frequency band. If the WD 101 includes a plurality of antennas, a corresponding communication unit 206 may be provided for each antenna. The antenna 207 may be provided separately from the communication unit 206 as illustrated in FIG. 2, or may be configured as a single module together with the communication unit 206.

In the WD 101 of the present embodiment, the above-described AP function and the STA function are implemented as separate communication interfaces that can be used to communicate with different counterpart devices. The communication unit 206 is configured including such a plurality of communication interfaces.

### <Functional Configuration of Communication Device>

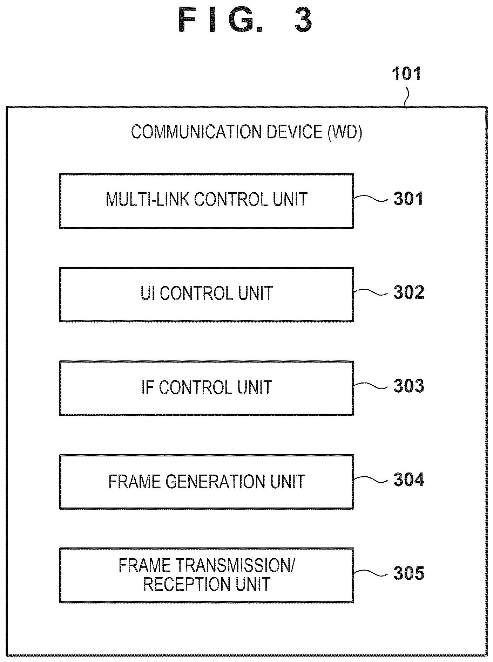

FIG. 3 is a block diagram illustrating an example of the functional configuration of the communication device 101 (the WD 101) according to the present embodiment. The WD 101 includes, as functional units, a multi-link control unit 301, a user interface (UI) control unit 302, an interface (IF) control unit 303, a frame generation unit 304, and a frame transmission/reception unit 305.

The multi-link control unit 301 performs control related to multi-link communication. For example, the multi-link control unit 301 controls connection processing for establishing one or more links used for wireless communication with a counterpart AP (e.g., the AP 102) through the STA function or wireless communication with a counterpart STA (e.g., the STA 103) through the AP function. The multi-link control unit 301 further controls processing for adding or removing links after communication has started, and communication termination processing for removing all of the links. Specifically, the connection processing includes authentication processing, association processing, and 4-way handshake (4WHS) processing.

The UI control unit 302 controls the input unit 204 and the output unit 205 to accept user operations through a touch panel or the like, and to output information to the user (through displays in a screen, outputting audio, or the like). For example, using a screen displayed by the output unit 205, the UI control unit 302 accepts touch panel operations from the user through the input unit 204. The UI control unit 302 makes various types of settings in accordance with the accepted user operations, and saves setting data indicating the settings in the storage unit 201.

The IF control unit 303 controls individual communication interfaces (communication IFs) that can be used to communicate with corresponding different counterpart devices. For example, the IF control unit 303 controls the starting and stopping of each communication IF (the AP function or the STA function). The IF control unit 303 also manages the IP addresses used by each communication IF, and determines the radio frequency (frequency channel) based on the user settings.

The frame generation unit 304 generates MAC frames, including management frames such as Beacons, Probe Requests, Probe Responses, Authentication Requests, Association Requests, or the like, as well as data frames. The frame transmission/reception unit 305 transmits wireless frames, including the MAC frames generated by the frame generation unit 304, and receives wireless frames from partner devices (counterpart devices).

### <Processing Sequence>

First to third working examples will be described hereinafter as examples of the processing sequence executed by the WD 101 described above. The first and second working examples will describe examples of processing for, in a situation where, in the WD 101, one function among the STA function and the AP function (one communication IF) is already running and the other function (communication IF) is additionally started, determining an operating channel for the function that is to be started. The third working example will describe an example of processing for displaying a settings screen for AP operations and an example of a settings screen that is displayed, corresponding to the first working example.

### [First Working Example]

The first working example will describe an example in which the AP function is started after the STA function has been started first. Accordingly, in the present working example, the STA function corresponds to a first communication IF (a first interface) that is started first, and the AP function corresponds to a second communication IF (a second interface) that is started after.

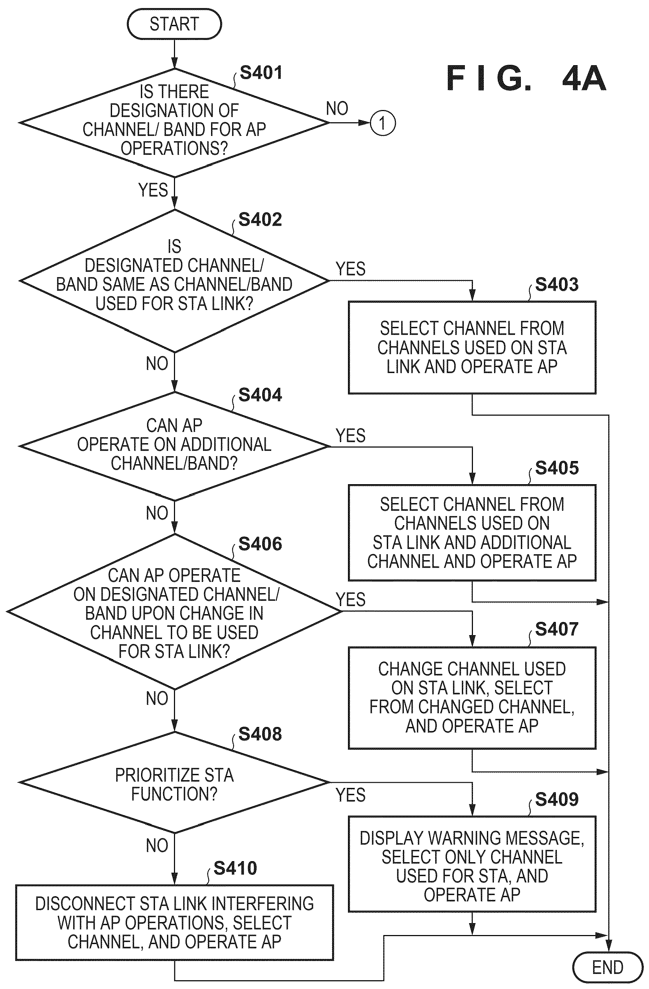

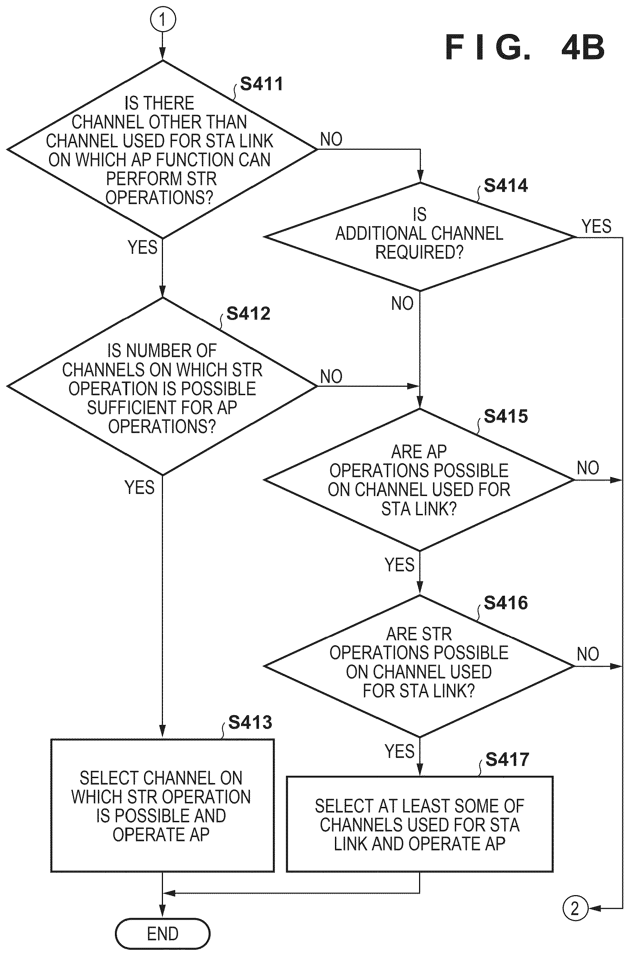

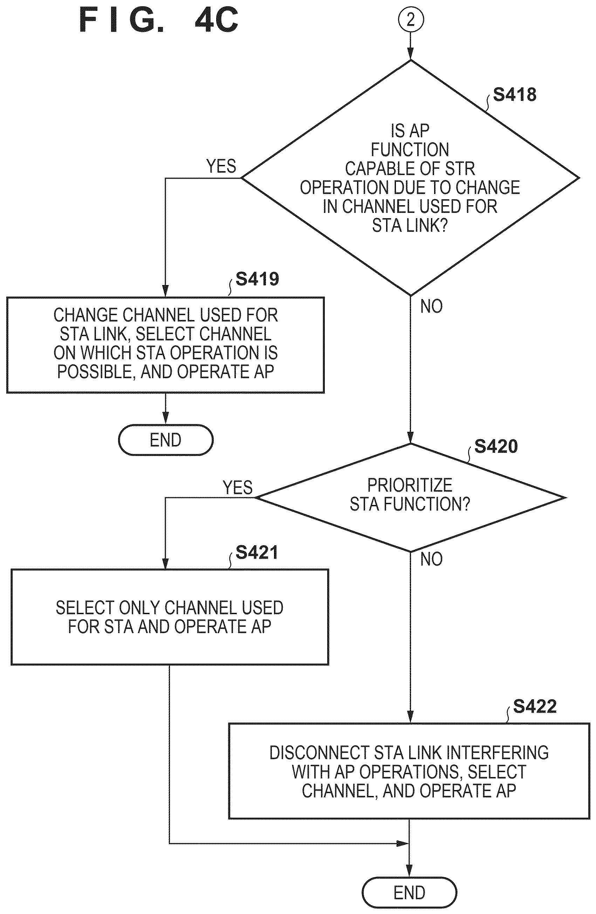

FIGS. 4A to 4C are flowcharts illustrating processing sequences for determining the operating channels for the AP function in a case where the AP function is started while the WD 101 is already connected to a counterpart AP (the AP 102, in this example) through the STA function. This sequence is executed, for example, in a case where a connection to another AP is already made through the STA function when the AP function is started in response to the power or the wireless function (the wireless LAN function) of the WD 101 being turned on or an instruction to start AP operations of the WD 101 being received. Note that this sequence may be executed in a case where the operating channels are changed after the AP operations are started, due to a deterioration in the radio wave environment or the like, for example.

In S401, if STA operations are underway in a case where the AP function is started, the WD 101 first determines whether a frequency bands/channels for AP operations ("frequency bands/channels" as used herein means the frequency bands or the channels (frequency channels)) are designated. The WD 101 moves the sequence to S402 if the frequency bands/channels for AP operations is designated, and moves the sequence to S411 if not.

### • If the frequency bands/channels for AP operations are designated

In S402, the WD 101 confirms the frequency band and the channels being used on the STA link (the link for connecting to the counterpart AP), and determines whether these are the same as the frequency bands and the channels designated for AP operations. If the frequency bands for AP operations are designated, whether the channels being used on the STA link are included in the designated frequency bands is used as a determination criterion in this determination. If the channels for AP operations are designated, whether the designated channels matches the channels being used on the STA links is used as a determination criterion.

Note that the present working example assumes that the STA function of the WD 101 establishes a plurality of links (STA links) with the AP 102 and performs multi-link communication, and the AP function of the WD 101 also performs multi-link communication. However, in the following, the same processing may be performed in a case where either the STA function or the AP function is using a single link (e.g., in a case where a plurality of frequency bands/channels are designated for AP operations in a state where the STA function is connected to the AP 102 over a single link, or in a case where a single frequency band/channel is designated for AP operations in a state where the STA function is connected to the AP 102 over a plurality of links). The same processing can also be performed in a case where selecting one of a plurality of frequency bands/channels is designated for the AP operations.

If the frequency band and channel designated for AP operations are the same as the frequency band and channel being used on the STA link ("YES" in S402), the WD 101 moves the sequence to S403. In S403, from among the channels being used on the STA links, the WD 101 preferentially selects, as the channels for AP operations, channels that are designated for AP operations and that are capable of Simultaneous Transmit and Receive (STR) operations for transmitting and receiving simultaneously over a plurality of links in a case where performing multi-link communication, and starts AP operations. "STR" means that transmission (reception) on link 2 can be performed in parallel with transmission (reception) on link 1 in a common period. "NSTR (Non-STR)" means that only reception (transmission) can be performed on link 2 during transmission (reception) on link 1 in the common period.

Note that in S403, the WD 101 does not select a channel for which AP operations are restricted, even if the channel is capable of STR operations. For example, if a channel being used on the STA link is included in the band required for Dynamic Frequency Selection (DFS) and the AP function does not support DFS, that channel can be excluded from the selection made in S403. As an example, if the 5 GHz band is designated for AP operations and the channel being used on the STA link requires DFS, the 5 GHz band designated for AP operations can, in S402, be determined not to be the same as the frequency band being used on the STA link.

In this manner, in S403, if the frequency channels designated for operations of the AP function (the second communication IF) are included in the plurality of frequency channels being used by the STA function (the first communication IF), the WD 101 selects, from the designated frequency channel, a frequency channel to be used on the link of the AP function.

On the other hand, if the frequency bands and channels designated for AP operations are not the same as the frequency bands and channels being used on the STA links ("NO" in S402), the WD 101 moves the sequence to S404. In S404, the WD 101 determines whether AP operations can be performed on a frequency band/channel not being used on the STA link and designated for AP operations in addition to the channel being used on the STA link (an additional frequency band/channel). For example, if the STA function is operating on channel 1 in 2.4 GHz and channel 36 in 5 GHz, and the 5 GHz and 6 GHz bands are designated as the frequency bands for AP operations, whether AP operations can be performed in the 6 GHz band is determined in S404.

If AP operations can be performed in the additional frequency band/channel ("YES" in S404), the WD 101 moves the sequence to S405. In S405, the WD 101 selects, from the channels being used on the STA link and the additional frequency band/channel, a channel capable of STR operations as the channel for AP operations, and starts the AP operations. In the foregoing, if STR operations can be performed using channel 36 in 5 GHz and channel 71 in 6 GHz, channel 36 in 5 GHz and channel 71 in 6 GHz are selected as the operating channels for the AP function. This makes it possible to simultaneously execute STA operations using channel 1 in 2.4 GHz and channel 36 in 5 GHz, and AP operations using channel 36 in 5 GHz and channel 71 in 6 GHz.

In this manner, in S405, if the frequency channels designated for operations of the AP function (the second communication IF) are not included in the plurality of frequency channels being used by the STA function (the first communication IF), the WD 101 selects the frequency channels to be used on the links of the AP function from the frequency channels that are the designated frequency channels and that are capable of STR operations, and the plurality of frequency channels.

On the other hand, if AP operations cannot be performed in the additional frequency band/channel ("NO" in S404), the WD 101 moves the sequence to S406. For example, if STR operations using the designated frequency band/channel cannot be performed due to hardware limitations such as limited RF resources, it is determined that AP operations cannot be performed in the additional frequency band/channel.

In S406, if the channel to be used on the STA link for connecting to the AP 102 has been changed, the WD 101 determines whether the AP function can operate in the frequency bands/channels designated for AP operations. The WD 101 moves the sequence to S407 if the AP function becomes capable of operating in the frequency bands/channels designated for AP operations due to a change in one or more channels used on the STA links. In S407, the WD 101 changes the channel to be used on the one or more STA links to another channel to satisfy the condition for AP operations (that STR operations are possible). In other words, the WD 101 changes the frequency channel used on the one or more links by the STA function such that a frequency channel capable of STR operations can be selected. The WD 101 further selects, from the channels being used on the STA links after the change, a channel capable of STR operations as the channel for AP operations, and starts the AP operations.

For example, consider an example in which the 2.4 GHz and 6 GHz bands are designated for AP operations in a state where the STA function is operating on channel 1 in 2.4 GHz and channel 36 in 5 GHz. In this example, it is assumed that the counterpart AP (the AP 102) has three links, and one of the three links uses channel 7 in the 6 GHz band.

In this case, for the STA link that uses channel 36 in 5 GHz, the WD 101 changes the channel used on the STA link to channel 7 in the 6 GHz band. As a result, the WD 101 is connected to the AP 102 over an STA link using channel 1 in the 2.4 GHz band and an STA link using channel 7 in the 6 GHz band. The WD 101 then starts AP operations using channel 1 in the 2.4 GHz band and channel 7 in the 6 GHz band, which are the same channels as the channels being used on the STA link.

As another example, consider an example in which the STA function is operating on channel 1 in the 2.4 GHz band and channel 36 in the 5 GHz band, channel 1 in 2.4 GHz and channel 40 in 5 GHz are designated for AP operations, and STR operations using channels 36 and 40 are not possible. In this example, it is assumed that the counterpart AP (the AP 102) has a link on channel 71 in the 6 GHz band aside from the 2.4 GHz band and the 5 GHz band, and the WD 101 is capable of STR operations using channel 40 in the 5 GHz band and channel 71 in the 6 GHz band.

In this case, for the STA link that uses channel 36 in the 5 GHz band, the WD 101 changes the channel used on the link to channel 71 in the 6 GHz band (S407). As a result, the STA function operates on channel 1 in the 2.4 GHz band and channel 71 in 6 Ghz. As a result, the STA function no longer uses channel 36, making it possible for the AP function to perform STR operations using channel 40. Accordingly, the WD 101 further selects channel 1 in 2.4 GHz and channel 40 in 5 GHz such that STR operations are possible, and starts the AP operations.

Note that these are merely examples, and the same applies to other frequency bands/channels as well. Additionally, in a case where the STA function changes the link, the link that is no longer used may be disconnected, or the link may be set to a Disabled state by canceling the assignment of the traffic identifier (TID) to that link. Additionally, for the link to be newly used, a new connection may be made, or the link may be made usable by assigning a TID to put the link in an Enabled state. The assignment of the TID is realized by communicating TID-to-Link Mapping information to the partner device (the counterpart device). Although it is desirable to determine whether STR operations are possible for the frequency channels, this determination may not be performed. The same applies for the following steps as well.

If in S407 the AP function does not become capable of operating in the frequency bands/channels designated for AP operations due to a change in the channels used on the STA links, the WD 101 moves the sequence to S408. For example, in the following cases, even if the channel used on the STA link is changed, the AP function does not become capable of operating in the frequency band/channel designated for AP operations.
- In a case where the AP 102 does not have any other links.
- In a case where the AP 102 has other links but the WD 101 cannot perform STR operations on those other links.
- In a case where the AP 102 has other links but those other links are included in a frequency band/channel that is not designated for AP operations in the WD 101.

In S408, the WD 101 determines whether to prioritize the STA function or the AP function (interface) with respect to the designation of the frequency bands and channels and the related operations. The determination in S408 may be made, for example, according to the type of application being executed or the use case, or according to the user's selection of which of the STA function or the AP function (interface) to prioritize. Alternatively, if a connection or operations on the link are to be avoided for one of the STA function and the AP function (interface), the link for which a continued connection is to be prioritized or the link to be disconnected may be selected if simultaneous operation of both functions will become possible.

If the STA function is prioritized, the WD 101 moves the sequence from S408 to S409. In S409, the WD 101 displays a warning message on an operation screen of the WD 101, and of the frequency bands/channels designated for AP operations, only the frequency bands/channels being used on the STA links are selected as the channels for AP operations, and AP operations are started.

As an example, assume that the STA function is operating on channel 1 in the 2.4 GHz band and channel 36 in the 5 GHz band, but the 2.4 GHz band and the 6 GHz band are designated as frequency bands for AP operations. In this example, the WD 101 starts the AP operations using only channel 1 in the 2.4 GHz band, which is being used on the STA link.

As another example, assume that the STA function is operating on channel 36 in the 5 GHz band and channel 7 in the 6 GHz band, but STR operations cannot be performed using these channels, and the 5 GHz band and the 6 GHz band are designated as the frequency bands for AP operations. In this example, the WD 101 does not perform AP operations. Alternatively, the WD 101 may start the AP operations using a channel in 2.4 GHz that is not designated, for example.

On the other hand, if the AP function is prioritized, the WD 101 moves the sequence from S408 to S410. In S410, of the STA links currently connected to the counterpart AP (the AP 102), the WD 101 disconnects or Disables the link that interferes with the starting of the AP operations, selects the channels for the AP operations, and starts the AP operations.

As an example, assume that the STA function is operating on channel 1 in the 2.4 GHz band and channel 36 in the 5 GHz band, but the 2.4 GHz band and the 6 GHz band are designated as frequency bands for AP operations. In this example, the WD 101 disconnects the STA link using the 5 GHz band or changes that STA link to the Disabled state (by canceling the assignment of the TID). The WD 101 then starts AP operations using channel 1 in 2.4 GHz and, for example, channel 7 in 6 GHz.

As another example, assume that the STA function is operating on channel 36 in the 5 GHz band and channel 7 in the 6 GHz band, but STR operations cannot be performed using these channels, and the 5 GHz band and the 6 GHz band are designated as the frequency bands for AP operations. In this example, the WD 101 first disconnects the STA link. Alternatively, the WD 101 uses only channel 36 in 5 GHz, for example, among the designated 5 GHz band and 6 GHz band. Furthermore, if STR operations using channel 36 in the 5 GHz band and channel 71 in the 6 GHz band become possible by changing the channel used in the 6 GHz band for the STA link from channel 7 to channel 71, the WD 101 leaves the STA link using channel 36 in the 5 GHz band in a connected state, and changes the STA link on channel 7 in the 6 GHz band to a disconnected or Disabled state. The WD 101 then starts AP operations using channel 36 in the 5 GHz band and channel 71 in the 6 GHz band. Note that the same applies in a case where the 2.4 GHz band is designated instead of the 6 GHz band for AP operations.

### • If the frequency bands/channels for AP operations are not designated

If the frequency bands/channels for AP operations are not designated, the WD 101 moves the sequence from S401 to S411. In S411, the WD 101 first determines whether, in addition to the channels being used on the STA links, there is a channel on which the AP function can perform STR operations, and whether there are RF resources available for the operations. The WD 101 moves the sequence to S412 if a determination of "YES" is made in S411, and moves the sequence to S414 if a determination of "NO" is made.

As an example, assume that the STA function is operating on channel 1 in the 2.4 GHz band and channel 36 in the 5 GHz band. In this example, a determination of "YES" is made in S411 in a case where the AP function is capable of STR operations using a channel in the 6 GHz band and RF resources are available. On the other hand, in this example, a determination of "NO" is made in S411 if the AP function is not capable of performing STR operations, even if any channel other than the channel in use by the STA function is selected for AP operations. A determination of "NO" is also made in S411 in a case where no RF resources are available. Note that the same applies in a case where the STA function is operating using only a single link.

In S412, the WD 101 determines whether the number of channels on which STR operations are possible would be sufficient for the number of channels (links) required for the AP operations in the case where, in addition to the channel being used on the STA link, the AP function performs AP operations using a channel on which the AP function is capable of performing STR operations. If the number of channels on which STR operations are possible is less than the required number of channels, the WD 101 moves the sequence to S415. In this case, while the utilization of the channels being used on the STA links is also considered, if the number of channels on which STR operations are possible meets the required number of channels, the WD 101 moves the sequence to S413. In S413, the WD 101 starts AP operations using channels on which STR operations are possible, other than the channels being used on the STA link. On the other hand, the WD 101,

If the sequence has moved to S414, the WD 101 determines whether a further channel is necessary for AP operations in addition to the channels or frequency bands being used on the STA link. For example, if the number of STA links is lower than the number of links required for the AP operations, a further channel is required for the AP operations. The WD 101 moves the sequence to S418 if a further channel is required for the AP operations, and to S415 if not.

In S415, the WD 101 determines whether the AP operations are possible using the channels being used on the STA links, moves the sequence to S417 if so, and moves the sequence to S418 if not. For example, if bandwidth restrictions are applied only to channels requiring DFS, or to the AP operations, it may not be possible to perform the AP operations using the channels being used on the STA links. If the number of STA links is lower than the number of links required for the AP operations, the WD 101 determines that AP operations are not possible using the channels being used on the STA link, and moves the sequence to S418.

In S416, the WD 101 determines whether the AP function is capable of performing the STR operations using the channels being used on the STA link. The WD 101 moves the sequence to S417 if the AP function is capable of performing the STR operations, and moves the sequence to S418 if the AP function is not capable of performing the STR operations. In S417, the WD 101 selects (determines) the channels being used on the STA link as the channels for the AP operations, and starts the AP operations. The WD 101 may, for example, scan each channel being used on the STA link and select channels for AP operations by selecting a combination of channels having low communication traffic among the combinations of channels on which STR operations are possible. Alternatively, the WD 101 may preferentially select a channel in a frequency band that is likely to be supported by the counterpart STA (STA 103).

In S418, if the channels to be used on the STA links for connecting to the AP 102 has been changed, the WD 101 determines whether the AP function is capable of performing the STR operations. The WD 101 moves the sequence to S419 if the AP function is capable of performing the STR operations, and to S420 if not. For example, if the number of channels on which the AP function is capable of performing the STR operations will increase as a result of the channels used on the STA links being changed, the WD 101 moves the sequence to S419. On the other hand, if there is no other link to which the STA can transition, or if such another link is present but there are no excess RF resources to perform AP operations using the other link, the WD 101 moves the sequence to S420.

For example, assume that the STA function is operating on channel 1 in the 2.4 GHz band and channel 161 in the 5 GHz band, and as long as the STA function is operating on channel 161 in the 5 GHz band, no channel in the 5 GHz band and the 6 GHz band is present on which the AP function can perform the STR operations. In this example, if the channel used on the STA link is changed to channel 71 in the 6 GHz band (which is being used on another link that the AP 102 has), the AP function is assumed to be capable of performing the STR operations using channel 36 in the 5 GHz band. It is also assumed that there are excess RF resources available. In this case, the WD 101 changes the channel used for the STA link from channel 161 in 5 GHz to channel 71 in 6 GHz, selects channel 1 in the 2.4 GHz band and channel 36 in the 5 GHz band for the AP operations, and starts the AP operations. This enables the WD 101 to perform the STR operations using a plurality of STA links, each established on a respective selected channel, and suppresses mutual interference between the AP function and the STA function in the WD 101.

In S419, the WD 101 changes the channels to be used on the STA links (or changes the links to the Disabled state and the new links to the Enabled state), selects the channels for the AP operations, and starts the AP operations.

On the other hand, in S420, the WD 101 determines, through a determination similar to that made in S408, whether to prioritize the STA function or the AP function (interface) with respect to the designation of the frequency bands and channels and the related operations. The WD 101 moves the sequence to S421 if the STA function is to be prioritized, and moves the sequence to S422 if the AP function is to be prioritized.

If the STA function is to be prioritized, in S421, the WD 101 selects, as the channels for the AP operations, only the channels on which AP operations can be performed from among the channels being used on the STA links, and starts the AP operations. In other words, the WD 101 only starts the links over the selected channels, and does not start links over other channels. Note that starting the AP function may be skipped if all of the channels being used on the STA link can only be used in NSTR operations.

On the other hand, if the AP function is to be prioritized, in S422, of the STA links currently connected to the counterpart AP (the AP 102), the WD 101 disconnects the links that interfere with the STR operations performed by the AP function or changes the link to the Disabled state. The WD 101 furthermore selects the channels to be used for the AP operations from among the channels being used on the STA link, and starts the AP operations.

### <Example of Sequence>

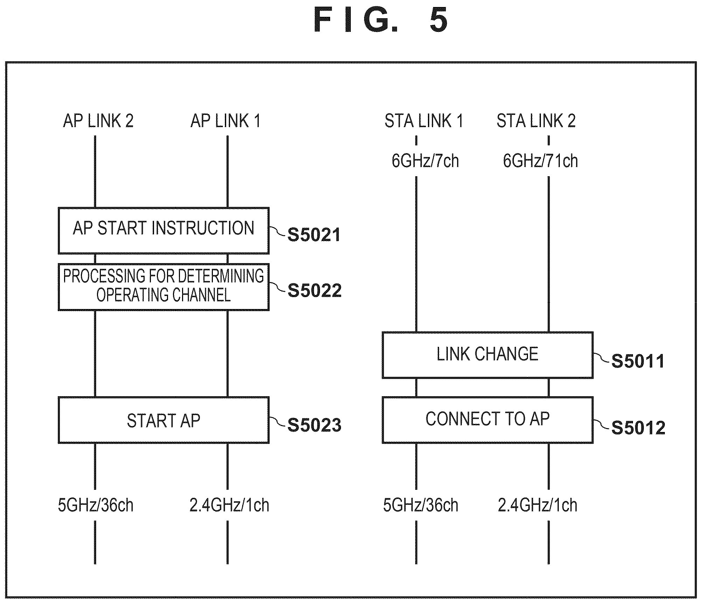

FIG. 5 is a sequence chart illustrating an example of operations performed by the WD 101 according to the sequence illustrated in FIGS. 4A to 4C.

In the example in FIG. 5, the AP 102, which is the counterpart AP for the STA function of the WD 101, has a plurality of links that use channel 1 in the 2.4 GHz band, channel 36 in the 5 GHz band, channel 7 in the 6 GHz band, and channel 71 in the 6 GHz band, respectively. In addition, in the WD 101, the STA function is started first, and links over channel 7 in the 6 GHz band and channel 71 in the 6 GHz band, respectively, are established as the STA links with the AP 102. Operation in the 2.4 GHz band and the 5 GHz band is also designated as a condition for the AP function to operate.

Upon receiving an AP start instruction to start the AP operations in the two stated frequency bands (the 2.4 GHz band and the 5 GHz band) in S5021, in S5022, the WD 101 performs determination processing for determining the operating channels to be used for the AP operations, in accordance with the sequence illustrated in FIGS. 4A to 4C. In this example, as a result of the determination processing of FIGS. 4A to 4C, the WD 101 performs processing to change the channels used on the STA links to another channels and start the AP operations on the channels designated in the AP start instruction (S407). Through this, the connection of the STA link can be continued while meeting the operating requirements designated in the AP start instruction.

First, in S5011, the WD 101 transmits a notification to the counterpart AP (the AP 102) for changing the channels to be used on the STA links. For example, processing for first changing the two links (links 1 and 2) to the Disabled state through a TID-to-Link Mapping update and then assigning TIDs to the other links to put the other links in an Enabled state may be performed, or the other connected links may be disconnected.

Then, in S5012, the WD 101 reconnects the STA link such that the operating conditions designated in the AP start instruction are met. In S5023, the WD 101 starts the AP function, and starts the AP operations using the channels to be newly used on the STA links. Note that either S5023 or S5012 may be executed first, or both may be executed at the same time. If the AP function is started first, the WD 101 may, for example, wait for a connection from the counterpart STA (the STA 103), and then reconnect the STA function. This makes it possible to confirm that the STA 103 can reliably connect to the WD 101. On the other hand, if the STA function is reconnected first, the WD 101 can shorten the period for which the AP 102 and the WD 101 are disconnected.

As described above, the WD 101 (communication apparatus) according to the present working example is configured to include first and second communication IFs (the STA function and the AP function), which are communication IFs that can be used to communicate with mutually-different counterpart devices. When operations of the AP function (the second communication IF) are started in a state where the STA function (the first communication IF) is performing multi-link communication, the WD 101 selects, as the frequency channels to be used on links of the AP function (the second communication IF), at least some of a plurality of frequency channels each used on a corresponding one of a plurality of links by the STA function (the first communication IF). The WD 101 further controls the AP function (the second communication IF) to communicate with the counterpart device using the selected frequency channels. The WD 101 may be configured to preferentially select frequency channels, among the plurality of frequency channels used by the STA function (the first communication IF), on which STR operations are possible.

In this manner, according to the present working example, in a case where the STA function is started first and the AP function is started after to operate simultaneously with the STA function, the channels to be used by the AP function can be determined appropriately. This makes it possible to reduce the likelihood of frame transmission and reception errors and communication interruptions occurring in both the STA function and the AP function, and make the communication more stable.

A determination of "NO" may be made in S401 by, for example, not setting the frequency band/channel on which the AP function operates in the processing of FIGS. 4A to 4C. In this case, the user can leave operations that are not absolutely necessary for the connection to the communication device (the WD 101), and the connection between the communication device and the counterpart device can be made more easily.

### [Second Working Example]

The first working example described an example in which the STA function is started first and a connection is made with the counterpart AP, after which the AP function is started and operated simultaneously with the STA function. The second working example will describe an example in which the AP function is started first, after which the STA function is started and a connection is made with the counterpart AP. Accordingly, in the present working example, the AP function corresponds to a first communication IF (a first interface) that is started first, and the STA function corresponds to a second communication IF (a second interface) that is started after. The following descriptions will focus upon the parts different from the first working example.

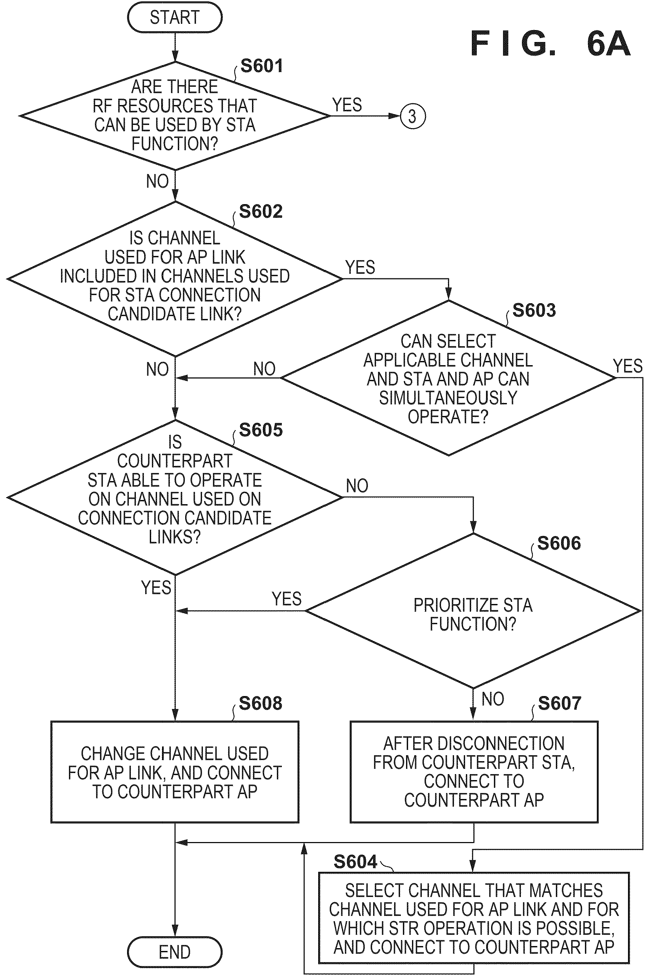

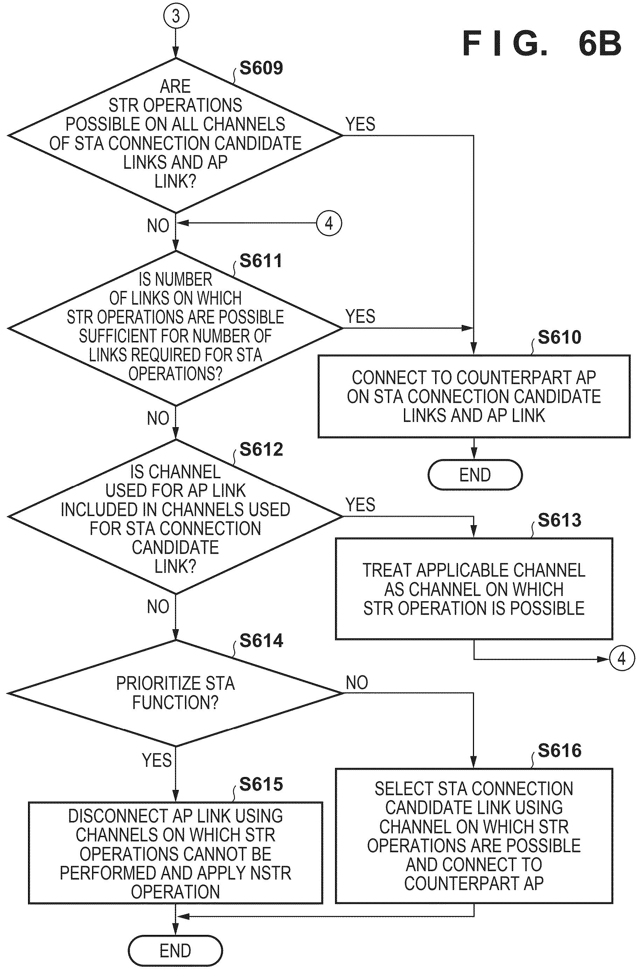

FIGS. 6A and 6B are flowcharts illustrating an example of a sequence of processing for determining an operating channels for the STA function when the WD 101 starts the AP function first, and then starts the STA function and connects to the counterpart AP (the AP 102) as an STA. This sequence is executed, for example, in a case where a connection to another AP is already made through the STA function when the AP function is started in response to the power or the wireless function (the wireless LAN function) of the WD 101 being turned on or an instruction to start AP operations of the WD 101 being received. Note that this sequence may be executed when the operating channels are changed after the AP operations are started, due to a deterioration in the radio wave environment or the like, for example.

In S601, when the STA function is started, the WD 101 first determines whether there are RF resources (RF units) that can be used by the STA function in addition to the RF resources (RF units) being used by the AP function. If there are no RF resources that can be used by the STA function (i.e., the AP function is using all the RF resources), the WD 101 moves the sequence to S602. On the other hand, if there are RF resources that can be used by the STA function, the WD 101 moves the sequence to S609.

### • If there are RF resources that can be used by the STA function

In S609, the WD 101 determines whether the STR operations are possible on all of the channels being used on connection candidate links provided by the counterpart AP (the AP 102) and the channels being used on the AP links of the AP function (the link for connecting to the counterpart STA). The WD 101 moves the sequence to S610 if the STR operations are possible on all of the channels being used on the connection candidate links for the STA operations and the channels being used on the AP link for AP operations, and moves the sequence to S611 if not. In S610, the WD 101 connects to the counterpart AP (the AP 102) using a connection candidate link for the STA operations and the AP link.

On the other hand, in S611, the WD 101 determines whether the number of channels (links) on which the STR operations are possible is sufficient for the number of links required for the STA operations, even if the STR operations are possible on some (but not all) links (channels). If the number of channels on which STA operations are possible is sufficient for the required number of channels, the WD 101 moves the sequence to S610 and performs the sequence described above, whereas if the number of channels on which STA operations is less than the required number of channels, the sequence moves to S612.

In S612, the WD 101 determines whether the channels being used on the connection candidate links for the STA operations include the same channel as the channel being used for the AP operations. If the channels being used on the connection candidate links for the STA operations include the same channel as the channel being used for the AP operations, the WD 101 moves the sequence to S613, assumes the channel is a channel on which STR operations are possible, and returns the sequence to S611. In this case, when the sequence moves to S610, for the STA operations, the WD 101 performs the STR operations using the same channel as the channel being used for the AP operations and the RF resources allocated for the STA function.

If the channels being used on the connection candidate links for the STA operations do not include the same channel as the channel being used for the AP operations (or if the channel is included but the number of channels (links) on which the STR operations are possible is less than the number of links required for the STA operations), the WD 101 moves the sequence from S612 to S614.

In S614, the WD 101 determines, through a determination similar to that made in S408, whether to prioritize the STA function or the AP function (interface) with respect to the designation of the frequency band and channel and the related operations. The WD 101 moves the sequence to S615 if the STA function is to be prioritized, and moves the sequence to S616 if the AP function is to be prioritized.

If the STA function is to be prioritized, in S615, the WD 101 suspends the startup, or implements operations through NSTR operations, for links corresponding to channels on which the STR operations cannot be performed with channels being used on the connection candidate links for the STA operations, among the channels being used on the AP link. Alternatively, the WD 101 changes to the channel on which the counterpart STA (the STA 103) is to operate by notifying the counterpart STA that the channels for AP operations are to be changed. At that time, whether it is possible to change to the channels corresponding to the counterpart STA may be confirmed.

On the other hand, if the AP function is to be prioritized, in S616, the WD 101 selects, from among the connection candidate links with the counterpart AP (the AP 102), a link that is using a channel on which the STR operations with the channel being used on the AP link are possible, and connects with the counterpart AP on that link.

### • If there are no RF resources that can be used by the STA function

In S602, the WD 101 determines whether the channels being used on the connection candidate links for the STA operations, provided by the counterpart AP (the AP 102), include the same channel as the channels being used on the AP links. The WD 101 moves the sequence to S603 if the channels being used on the connection candidate links include the same channel as the channels being used on the AP links, and moves the sequence to S605 if not. In S603, the WD 101 determines whether the same channel can be selected as a channel for a connection candidate link, and whether the STA operations and the AP operations can be executed at the same time. Note that in FIGS. 6A and 6B, whether the STA operations and the AP operations can be executed at the same time refers to a case where the AP operations can no longer be implemented in a case where a plurality of connection candidate links for the STA operations are selected.

For example, if the AP function is operating on channel 1 in the 6 GHz band and the counterpart AP (the AP 102) is also providing a link on the same channel, the WD 101 is assumed not to support STA operations in the 6 GHz band. Alternatively, it is assumed that the AP function is operating on channel 149 in the 5 GHz band, and the counterpart AP is providing links on channel 36 in the 5 GHz band, channel 149 in the 5 GHz band, and channel 71 in the 6 GHz band, for example. In this case, although at least two links should be prepared for the STA operations, it is assumed that only NSTR operations can be performed even if any other channel is selected in combination with channel 149, which matches the operating channel of the AP function. In such a case, the WD 101 makes a determination of "NO" in S603, and moves the sequence to S605.

On the other hand, in a case where a determination of "YES" is made in S603, the WD 101 moves the sequence to S604. In S604, the WD 101 selects, from the channels being used on the connection candidate links for the STA operations, a channel that matches the channel being used on the AP link and on which the STR operations are possible, and connects to the counterpart AP.

If a determination of "NO" is made in S602 or S603, in S605, the WD 101 determines whether the counterpart STA (the STA 103) currently connected to the AP function can operate on the same channel as a channel being used on the connection candidate links for the STA operations. The WD 101 moves the sequence to S608 if the counterpart STA can operate on at least some of the channels being used on the connection candidate links. In S608, the WD 101 transmits, to the counterpart STA, a notification for changing a channel other than the channel on which the counterpart STA can operate to a channel on which the counterpart STA can operate, changes the channel being used on the AP link, and connects to the counterpart AP through the STA function.

On the other hand, if the channels being used on the connection candidate links do not include a channel on which the counterpart STA can operate, the WD 101 moves the sequence to S606. In S606, the WD 101 determines, through a determination similar to that made in S408, whether to prioritize the STA function or the AP function (interface) with respect to the designation of the frequency band and channel and the related operations. The WD 101 moves the sequence to S608 if the STA function is to be prioritized, and moves the sequence to step S607 if the AP function is to be prioritized.

If the STA function is to be prioritized, in S608, the WD 101 changes the channel being used on the AP link to a channel, among the connection candidate links for the STA operations (provided by the counterpart AP), on which the counterpart STA can operate, and makes a connection to the counterpart AP (the AP 102) through the STA function. On the other hand, if the AP function is to be prioritized, in S607, the WD 101 terminates the connection with the counterpart STA made using the AP function, and then connects to the counterpart AP through the STA function. Alternatively, the WD 101 may change the channels being used on some of the AP links, and make a connection to the counterpart AP through the STA function.

### <Example of Sequence>

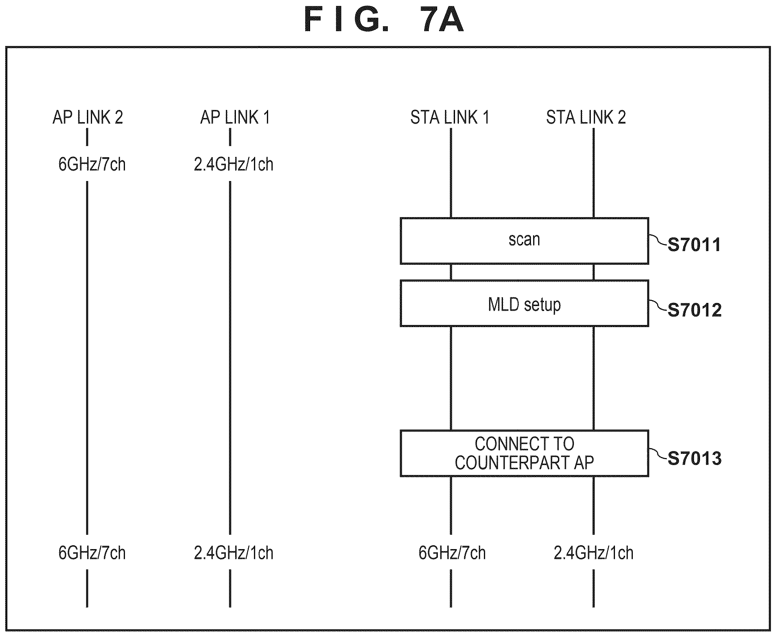

FIGS. 7A to 7C are sequence charts illustrating an example of operations performed by the WD 101 according to the sequence illustrated in FIGS. 6A and 6B.

FIG. 7A illustrates an example of the sequence performed in a case where the processing of S604 or S610 is performed in the sequence illustrated in FIGS. 6A and 6B. The WD 101 constructs a wireless network by operating the AP function on channel 1 in the 2.4 GHz band and channel 7 in the 6 GHz band. In S7011, the WD 101 scans the surroundings in order to connect to the counterpart AP (the AP 102) using the STA function. Next, in S7012, through MLD setup, the WD 101 obtains information other than the link information obtained through the scan. As a result, the WD 101 confirms that the counterpart AP is constructing a wireless network using the same channels as the channels being used on the link provided by the WD 101 (channel 1 in the 2.4 GHz band and channel 7 in the 6 GHz band). Accordingly, in S7013, the WD 101 starts the STA operations by connecting to the counterpart AP through the STA function, using the confirmed channels. In this case, in the WD 101, the AP operations remain the same as before the start of the STA operations, and the AP operations and the STA operations can be executed in parallel.

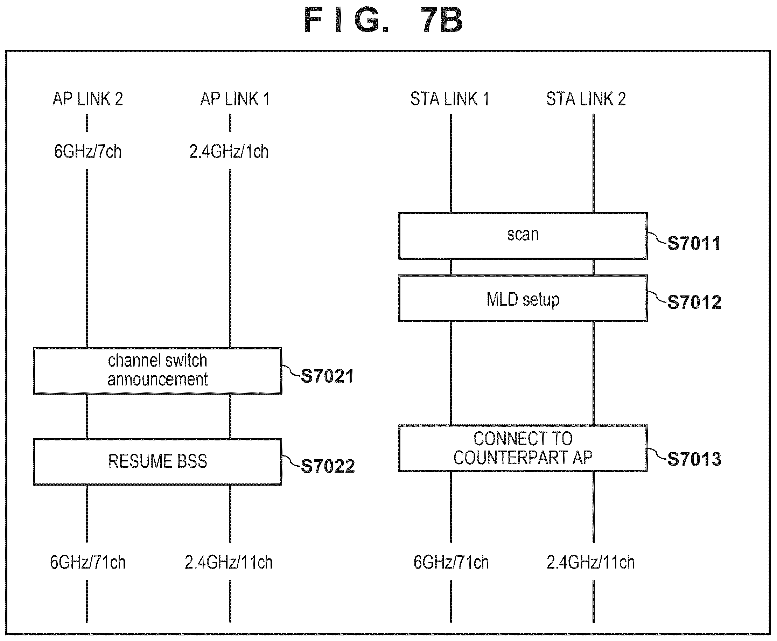

FIG. 7B illustrates an example of the sequence performed in a case where the processing of S608 or S615 is performed in the sequence illustrated in FIGS. 6A and 6B. The STA operations of the WD 101 are the same as those in FIG. 7A. However, in this example, it is assumed that the counterpart AP (the AP 102) is operating on channel 11 in the 2.4 GHz band and channel 71 in the 6 GHz band, and NSTR operations will be performed (the STR operations cannot be performed) even if those channels are selected for the AP operations of the WD 101. Alternatively, it is assumed that there are insufficient RF resources and no other channels can be selected.

In this case, in S7021, the WD 101 makes a notification (to the counterpart STA) that the channels for the AP operations are to be changed in order to change the channels to those being used in the STA operations. This is performed, for example, using the channel switch announcement message defined in the IEEE 802.11 standard. After the notification in S7021, in S7022, the WD 101 changes the channel for the AP operations and resumes the AP operations. As a result, the WD 101 matches the channels for the AP operations to channel 11 in the 2.4 GHz band and channel 71 in the 6 GHz band, which are the channels used on the STA links 1 and 2, respectively.

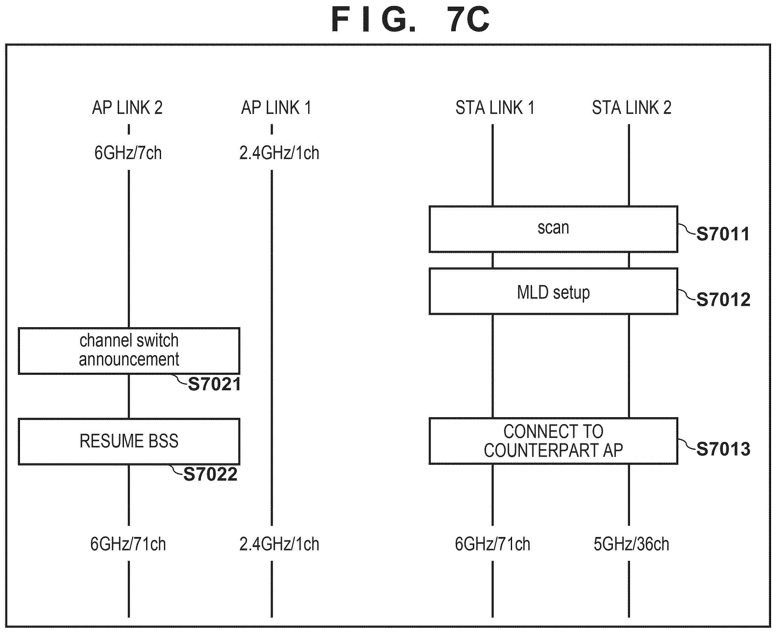

FIG. 7C illustrates an example of the sequence performed in a case where the processing of S615 is performed having performed the processing of S613 in the sequence illustrated in FIGS. 6A and 6B. The WD 101 constructs a wireless network by operating the AP function on channel 1 in the 2.4 GHz band and channel 7 in the 6 GHz band. The WD 101 executes the scan (S7011) and the MLD setup (S7012) to connect to the counterpart AP (the AP 102) through the STA function. As a result, the WD 101 confirms that the counterpart AP is constructing a wireless network using channel 36 in the 5 GHz band and channel 71 in the 6 GHz band.

If the WD 101 continues to use channel 7 in the 6 GHz band as the channel for the AP operations, it is assumed that the STR operations are confirmed as not being possible with the candidate channels used on each link for the STA operations, and that there are insufficient RF resources for operating on individual channels. Accordingly, the WD 101 stops using channel 7 in the 6 GHz band as a channel for AP operations, and changes that channel to channel 71 in the 6 GHz band, which is a candidate channel for the STA operations.

In S7013, the WD 101 starts the STA operations by connecting to the counterpart AP through the STA function using channel 36 in the 5 GHz band and channel 71 in the 6 GHz band. On the other hand, for channel 1 in the 2.4 GHz band, which is being used for the AP operations, the WD 101 can perform the STR operations and therefore continues to use that channel as-is. However, the WD 101 cannot continue using channel 7 in the 6 GHz band, and thus in S7021, the change in the channel for the AP operations is communicated (to the counterpart STA). After the notification in S7021, in S7022, the WD 101 changes the channel for the AP operations and resumes the AP operations.

Note that in the example of FIGS. 7B and 7C, the WD 101 disconnects the existing channel once, and then resumes the AP operations, in order to change the channel. At that time, in the example illustrated in FIG. 7B, a period of time when the connection with the counterpart STA (the STA 103) is interrupted arises, and thus the WD 101 may execute the channel change notification and the resumption of the AP operations at timings which are shifted from link to link. This makes it possible to change the channel for the AP operations while partially maintaining the connection with the counterpart STA.

As described above, the WD 101 (communication apparatus) according to the present working example is configured to include first and second communication IFs (the AP function and the STA function), which are communication IFs that can be used to communicate with mutually-different counterpart devices. When operations of the STA function (the second communication IF) are started in a state where the AP function (the first communication IF) is performing multi-link communication, the WD 101 selects, as the frequency channels to be used on links of the STA function (the second communication IF), at least some of a plurality of frequency channels each used on a corresponding one of a plurality of links by the AP function (the first communication IF). The WD 101 further controls the STA function (the second communication IF) to communicate with the counterpart device using the selected frequency channels. The WD 101 may be configured to preferentially select frequency channels, among the plurality of frequency channels used by the AP function (the first communication IF), on which STR operations are possible.

In this manner, according to the present working example, even in a case where the AP function is started first and the STA function is started after to operate simultaneously with the AP function, the channels to be used by the STA function can be determined appropriately. This makes it possible to reduce the likelihood of frame transmission and reception errors and communication interruptions occurring in both the AP function and the STA function, and make the communication more stable.

### [Third Working Example]

The third working example will describe an example of processing for displaying a screen (a settings screen) for accepting settings for operating the AP function from a user in connection with the first working example. In this processing, when the user selects frequency bands/channels, processing for appropriately narrowing down the options is performed. This makes it possible to prevent the user from selecting a frequency band/channel on which the AP function cannot operate or on which the communication is even temporarily blocked. The following descriptions will focus upon the parts different from the first working example.

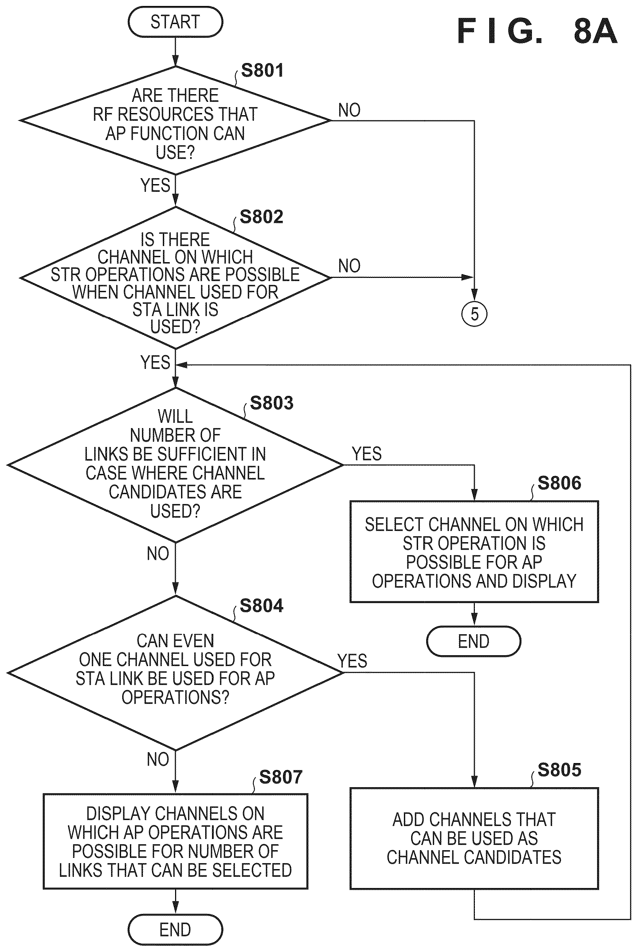

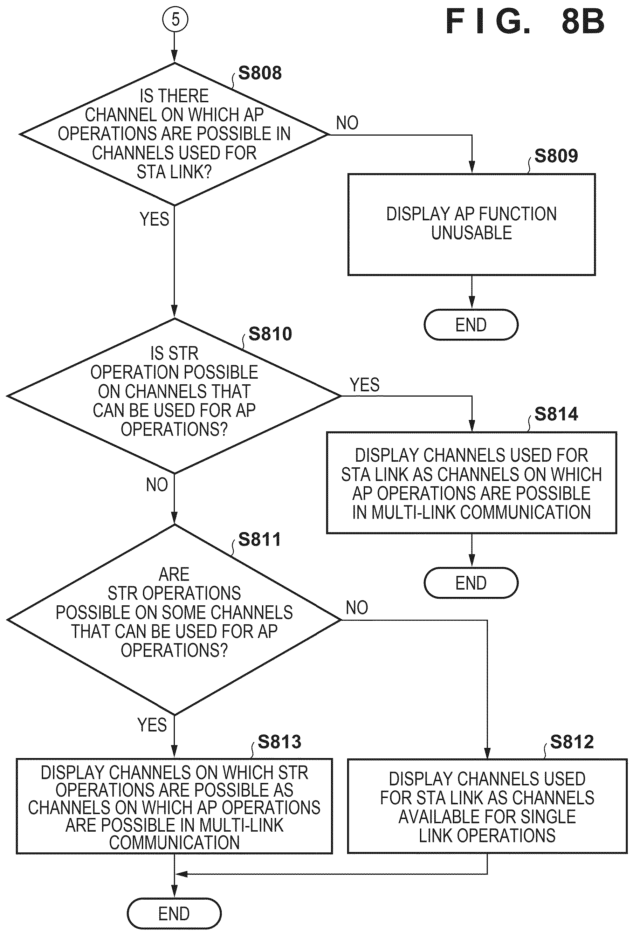

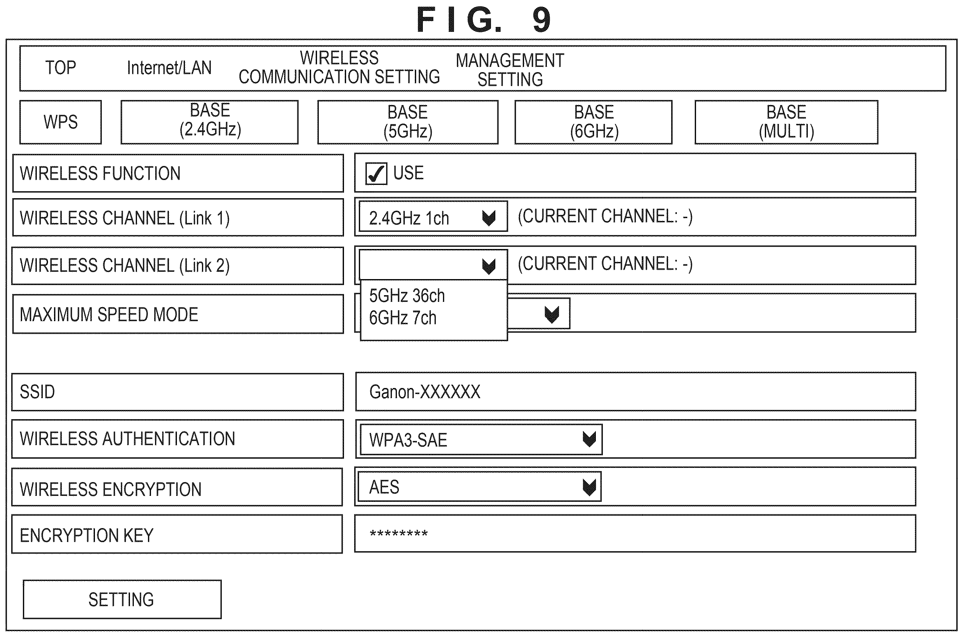

FIGS. 8A and 8B are flowcharts illustrating a sequence for displaying the settings screen for the AP operations, executed by the WD 101. The sequence illustrated in FIGS. 8A and 8B is executed when the AP operations are started while the STA operations are underway. Alternatively, the sequence illustrated in FIGS. 8A and 8B may be executed when a user operation for displaying the settings screen for the AP operations (illustrated in FIG. 9) is performed, or when a channel is selected when a predetermined application is executed, in a state where the STA operations are underway.

In S801, the WD 101 determines whether there are RF resources that can be used by the AP function in addition to the RF resources being used by the STA function. If there are no RF resources that can be used by the AP function, the WD 101 moves the sequence to S808. On the other hand, if there are RF resources that can be used by the AP function, the WD 101 moves the sequence to S802.

In S802, the WD 101 determines whether there is a channel on which STR operations are possible in a case where the channel being used in the STA operations is also being used in the AP operations. The WD 101 moves the sequence to step S808 if there is no channel on which the STR operations are possible, and moves the sequence to step S803 if there is a channel on which the STR operations are possible. In S803, with respect to the RF resources used in the AP operations, the WD 101 determines whether the number of links for the AP operations will be sufficient if the channel candidates are used (described later). If the number of links is sufficient, the WD 101 moves the sequence to S806, where channels on which STR operations are possible are displayed so as to be selectable as channels on which the AP operations can be performed.

On the other hand, if the number of links is insufficient, the WD 101 moves the sequence from S803 to S804, and determines whether any of the channels being used in the STA operations can be used for the AP operations. For example, although the STA function operates on the DFS channel, the AP function may not support DFS. Alternatively, there are cases where the STA function is operating in a band that supports the STA function but does not support the AP function. In this manner, if the channel being used for the STA operations cannot be used for the AP operations, the WD 101 moves the sequence to S807. In S807, the WD 101 displays the channels that can be used for the AP operations within the number of links that can be selected, even if the number of links falls short of the number for the AP operations.

If the channels being used in the STA operations can be used for the AP operations, the WD 101 moves the sequence to S805. In S805, of the channels being used in the STA operations, the WD 101 adds the channels that can be used for the AP operations as candidates for channels for the AP operations, shares the corresponding RF resources with the STA function, increases the number of supported links by 1, and returns the sequence to S803. In S803, with respect to the RF resources used in the AP operations, the WD 101 again determines whether the number of links for the AP operations will be sufficient if the channel candidates are used (described later). If the number of links is sufficient, the WD 101 moves the sequence to S806, where channels on which STR operations are possible are displayed so as to be selectable as channels on which the AP operations can be performed.

Note that at that time, the shared RF resources may be displayed so as to be used in a fixed manner. For example, assume a case where the STA function operates on channel 1 in 2.4 GHz and channel 44 in 5 GHz, and the number of links is sufficient if the AP function shares channel 1 in 2.4 GHz. Furthermore, if the STR operations are possible on any channel in the 6 GHz band, the WD 101 may display a channel in the 2.4 GHz as a fixed selection, and a channel in the 6 GHz band to be selectable as the other link.

If there are no RF resources that can be used by the AP function ("NO" in S801), or if the channels being used in the STA operations are also used in the AP operations, and there are no channels on which the STR operations are possible ("NO" in S802), the WD 101 performs the processing of S808. In this case, the WD 101 selects a channel for AP operations from among the channels being used on the STA link.

To that end, in S808, the WD 101 determines whether the channels being used on the STA link include even one channel that can be used for the AP operations. If the channels being used on the STA link do not include even one channel that can be used for the AP operations, the sequence moves to S809. In S809, the WD 101 displays an indication that the AP function currently cannot be used. Alternatively, the WD 101 may display an indication that it is necessary to disconnect the STA link once in order to perform the AP operations.

On the other hand, if the channels being used on the STA link include a channel that can be used for the AP operations, the sequence moves to S810. In S810, the WD 101 determines whether all the channels that can be used for the AP operations are channels on which the STR operations are possible. The WD 101 moves the sequence to S814 if the channels that can be used for the AP operations are all channels on which the STR operations are possible. In S814, the WD 101 selectively displays such channels in a selectable manner, as being usable for multi-link communication.

If at least some of the channels that can be used for AP operations are channels on which the STR operations are not possible, the WD 101 moves the sequence to S811. In S811, the WD 101 determines whether some of the channels that can be used for AP operations are channels on which the STR operations are possible. If some of the channels are channels on which the STR operations are possible, the sequence moves to S813. In S813, the WD 101 displays, in a selectable manner, a combination of channels on which the STR operations are possible as channels on which the AP operations are possible through multi-link communication. On the other hand, if none of the channels is a channel on which the STR operations are possible, the WD 101 moves the sequence to S812. In S812, the WD 101 displays, in a selectable manner, the channels currently being used for STA links as channels available for operations in multi-link communication with NSTR operations applied, or as channels available for single-link operations.

### <Example of Settings Screen>

FIG. 9 illustrates an example of the settings screen for the AP operations. On the settings screen of FIG. 9, the options for the user to select the frequency bands/channels are limited as a result of the processing of FIGS. 8A and 8B.

For example, in the WD 101, the STA function is operating on channel 1 in the 2.4 GHz band, channel 36 in the 5 GHz band, and channel 7 in the 6 GHz band, and the number of links when the AP function is operating is 2. In this case, as illustrated in FIG. 9, on the settings screen, selectable candidates for the channels used on the links 1 and 2 are displayed having been limited to the channels being used on the STA link.

Although the settings screen of FIG. 9 is configured to limit the selectable channels, the settings screen may be configured to limit the selectable frequency bands. For example, assume that the communication device can operate in the 2.4 GHz band, the 5 GHz band, and the 6 GHz band, but the STA function is operating only in the 2.4 GHz band and the 5 GHz band. In this case, the frequency band candidates that can be selected for the AP operations may be displayed having been restricted to the 2.4 GHz band and the 5 GHz band.

Limiting the channels that can be selected by the user in the settings screen for the AP operations in this manner makes it possible for the user to more appropriately select the channels for the AP operations.

### [Other Embodiments]

Although the foregoing embodiments describe the STR operations being possible on the operating channel as one of the conditions for AP operations, the operating conditions are not limited thereto. For example, even if the AP function cannot perform the STR operations, the operating channel of the AP may be selected according to the channels being used on the STA links.

In addition, the number of links used by the WD 101 for the AP function and the STA function may be one, or may be three or more. For example, if the STA function uses a plurality of links and the AP function uses a single link, the channels, among the channels being used by the STA function, on which the STR operations are possible, may be selected as the channels for the AP operations. Conversely, if the STA function uses a single link and the AP function uses a plurality of links, one channel among the channels on which the STA function is operating, and a channel a sufficient frequency away from the channel on which the STA function is operating, may be selected as the channels for the AP operations.

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2023-078699, filed May 11, 2023, which is hereby incorporated by reference herein.

## Claims

1. A communication device capable of executing multi-link communication using a plurality of parallel links established over mutually-different frequency channels, the communication device comprising:
first and second interfaces that are communication interfaces capable of being used for communication with mutually-different counterpart devices;
selecting means for, in a case where operations of the second interface are started in a state where the first interface is performing the multi-link communication, selecting, as frequency channels to be used on links of the second interface, at least some of a plurality of frequency channels each used on a corresponding one of a plurality of links by the first interface; and
control means for controlling the second interface to communicate with the counterpart device using the frequency channels selected by the selecting means.

2. The communication device according to claim 1,
wherein among the plurality of frequency channels used by the first interface, the selecting means preferentially selects frequency channels on which an STR operation can be performed, the STR operation being an operation in which transmission and reception are performed simultaneously on a plurality of links in a case of performing the multi-link communication.

3. The communication device according to claim 2,
wherein in a case where frequency channels designated for use in operations of the second interface are included in the plurality of frequency channels used by the first interface, the selecting means selects, from the frequency channels designated, frequency channels to be used on links of the second interface.

4. The communication device according to claim 2 or 3,
wherein in a case where frequency channels designated for use in operations of the second interface are not included in the plurality of frequency channels used by the first interface, the selecting means selects frequency channels to be used on links of the second interface from among (i) the frequency channels which are designated and on which the STR operation can be performed and (ii) the plurality of frequency channels.

5. The communication device according to any one of claims 2 to 4, further comprising:
changing means for changing a frequency channel used on at least one link by the first interface such that a frequency channel on which the STR operation can be performed can be selected by the selecting means.

6. The communication device according to any one of claims 1 to 5,
wherein the first interface has a function for causing the communication device to operate as a station that connects to an external access point, and
the second interface has a function for causing the communication device to operate as an access point that accepts a connection from an external station.

7. The communication device according to any one of claims 1 to 5,
wherein the first interface has a function for causing the communication device to operate as an access point that accepts a connection from an external station, and
the second interface has a function for causing the communication device to operate as a station that connects to an external access point.

8. The communication device according to any one of claims 3 to 5,
wherein the selecting means selects the frequency channels to be used on links of the second interface in accordance with an instruction to start the second interface, and
the instruction to start includes a designation of frequency channels for the operations of the second interface.

9. The communication device according to any one of claims 3 to 5, further comprising:
display means for displaying a settings screen for the operations of the second interface, the settings screen being for accepting a selection of frequency channels by a user,
wherein, of a plurality of frequency channels used by the first interface on a respective plurality of links, the display means displays, on the settings screen in a selectable manner, frequency channels on which the STR operation can be performed, and
the selecting means determines frequency channels selected by the user on the settings screen as frequency channels to be used on links of the second interface.

10. The communication device according to any one of claims 1 to 9,
wherein the communication device is capable of executing multi-link communication compliant with an IEEE 802.11 standard.

11. A method for controlling a communication device which is capable of executing multi-link communication using a plurality of parallel links established over mutually-different frequency channels, and which comprises first and second interfaces that are communication interfaces capable of being used for communication with mutually-different counterpart devices, the method comprising:
in a case where operations of the second interface are started in a state where the first interface is performing the multi-link communication, selecting, as frequency channels to be used on links of the second interface, at least some of a plurality of frequency channels each used on a corresponding one of a plurality of links by the first interface; and
controlling the second interface to communicate with the counterpart device using the selected frequency channels.

12. A program for causing a computer of a communication device to execute a method according to claim 11.
